# FASCICULE DE BREVET EUROPEEN

(11) **EP 0 914 228 B1**
(45) Date de publication et mention de la délivrance du brevet: **21.11.2007**
(21) Numéro de dépôt: 98913846.6
(22) Date de dépôt: 06.03.1998
(51) Int. Cl.: B23K 11/30

(54) **DISPOSITIF POUR L'ENTRETIEN DES AUTOMATES PROGRAMMABLES**
VORRICHTUNG ZUR WARTUNG VON PROGRAMMIERBAREN AUTOMATEN
DEVICE FOR THE MAINTENANCE OF PROGRAMMABLE AUTOMATONS

(30) Priorité: 06.03.1997 FR 9702687
(43) Date de publication de la demande: 12.05.1999
(73) Titulaire: Louzier, Roger, 78670 Villennes sur Seine (FR)
(72) Inventeur: Louzier, Roger, 78670 Villennes sur Seine (FR)
(74) Mandataire: Burtin, Jean-François
(86) Numéro de dépôt international: PCT/FR1998/000446
(87) Numéro de publication internationale: WO 1998/039134

(56) Documents cités:
- EP-A- 0 200 162
- EP-A- 0 267 109
- EP-A- 0 667 206
- US-A- 5 495 663
- PATENT ABSTRACTS OF JAPAN vol. 15, no. 437 (M-1176), 7 novembre 1991 & JP 03 184673 A (KIYOKUTOO : KK), 12 août 1991, cité dans la demande

## Description

La présente invention concerne les dispositifs pour l'entretien des automates programmables, par exemple du type de ceux qui sont utilisés dans l'industrie automobile.

Chez la plupart des constructeurs automobiles, les carrosseries ou les caisses de véhicules automobiles sont le plus souvent constituées de tôles d'acier embouties, qui sont généralement assemblées par soudure. On a, par ailleurs, développé des automates programmables, encore appelés robots, pour réduire ou éliminer les tâches pénibles ou répétitives sur les chaînes d'assemblage, telles que la soudure des tôles d'acier composant la carrosserie d'un véhicule automobile.

De tels robots de soudage comportent de façon générale une pince de soudage, cette pince comportant deux bras portant chacun à son extrémité une électrode. Les bras de la pince sont mis en mouvement dans l'espace par des moteurs ou des vérins pneumatiques ou hydrauliques, de façon programmée pour que les électrodes viennent s'appliquer en des endroits précis des tôles à souder, et de part et d'autre de ces tôles. Une impulsion électrique, de tension et d'intensité également programmables, est alors appliquée aux bornes des électrodes pour effectuer la soudure par résistance et par points des tôles d'acier situées entre les électrodes.

D'une manière générale, les électrodes utilisées sont du type à tétons centrés, excentrés ou déportés. Ces électrodes comportent un fût cylindrique, dont l'une des faces planes porte le téton de soudure, et dans lequel un évidement axial central tronconique est pratiqué, de telle sorte que la grande base de cet évidement soit située dans le plan de l'autre surface plane du fût cylindrique.

Chaque bras de la pince de soudage est généralement muni à son extrémité d'un tube allonge faisant fonction de porte-électrode, et dont l'extrémité est elle-même de forme tronconique complémentaire de celle de l'évidement axial de l'électrode. L'assemblage entre le tube allonge et l'électrode est obtenu par l'introduction axiale du tube allonge dans l'évidement axial central du fût cylindrique de l'électrode à téton.

Après une certaine durée d'utilisation, ou encore après un certain nombre de soudures par point effectuées à l'aide d'un robot de soudage, il s'avère nécessaire de remplacer les électrodes usagées par des électrodes neuves.

Il faut alors déplacer les bras de soudage dans deux positions successives d'extraction où les électrodes sont successivement extraites de leurs supports, puis déplacer les bras de soudage dans une position de rechargement pour l'installation d'électrodes neuves, et remettre les bras de soudage dans leur position de soudage.

Ce procédé, outre le fait qu'il nécessite des temps d'arrêt d'une durée non négligeable de la chaîne d'assemblage pour l'entretien du robot de soudage, apparaît comme particulièrement complexe à programmer et à mettre à jour.

On a déjà proposé, par exemple dans le document EP-A-0 667 206, un appareil de remplacement automatique d'électrodes de soudure. Dans cet appareil, un poste extracteur double et un poste d'alimentation en électrodes sont prévus pour remplacer automatiquement les électrodes des bras opposés d'une machine de soudage par résistance. Le système de remplacement automatique est programmé pour remplacer successivement les électrodes lorsque le robot de soudage est à l'arrêt, par exemple pendant le mouvement des carrosseries d'automobiles sur leur convoyeur. L'extracteur double a une première position pour extraire l'électrode supérieure et une deuxième position pour extraire l'électrode inférieure. Les deux positions sont parallèles et comportent une pluralité de doigts de serrage actionnés chacune par une came, doigts qui impriment simultanément des mouvements de rotation et de translation aux électrodes pour les extraire des bras, après quoi les doigts de serrage relâchent les électrodes usagées. L'opération s'effectue en deux temps : une première électrode est d'abord traitée, la deuxième après.

Cet appareil connu présente comme inconvénients qu'il y a une perte de temps non négligeable dans le fait que les deux électrodes sont traitées successivement et qu'un mouvement de la pince est requis entre chaque étape.

Le document US-A-5 495 663 concerne un appareil de changement d'électrodes par arrachage comportant deux modules d'extraction superposés affectant chacun la forme d'un U coulissant. L'arrachement est effectué par une partie métallique en forme de V qui pénètre dans une encoche faite dans l'allonge et qui arrache l'électrode en l'expulsant de son support. De ce fait, cette machine nécessite des allonges spéciales. Tous les mouvements sont des mouvements coulissants ou glissants et il n'y a aucun mouvement tournant.

Le document JP-A-03/184673 décrit un dispositif dans lequel des cames déterminent un mouvement de torsion appliqué aux électrodes qui sont disposées dans un levier tournant formant chargeur de nouvelles électrodes.

Le document EP-A-0 267 109 décrit un dispositif d'extraction des électrodes comportant deux leviers. Et le document EP-A-0 200 162 décrit un procédé de remplacement automatique des électrodes à dispositif d'extraction unique.

La présente invention se place dans ce contexte et a pour objet de proposer un dispositif pour l'entretien d'automates programmables, qui permette d'extraire les électrodes usagées sans faire bouger les bras de la pince de soudage pour conserver les réglages géométriques initiaux, et qui soit de conception simple pour garantir sa fiabilité et son faible coût, et qui ne nécessite qu'un temps d'arrêt minimal du robot de soudage pour effectuer cette opération d'entretien.

Dans ce but, la présente invention prévoit un dispositif pour l'entretien d'automates programmables qui comportent au moins une pince formée d'une paire de bras présentant chacun une extrémité formant porte-électrode au bout de laquelle est emboitée une électrode, le dispositif comportant les caractéristiques de la revendication 1, ou celles de la revendication 3.

Selon l'invention, les deux modules d'extraction sont coaxiaux et comportent chacun un disque comprenant une mâchoire centrale de préhension d'une électrode, un moyen moteur commandant la rotation du disque pour décoller l'électrode du porte-électrode qui est immobilisé en rotation et en translation, un mouvement de translation axiale du disque séparant du porte-électrode l'électrode qui est prisonnière de la mâchoire.

Selon l'invention, les deux modules d'extraction sont actionnés simultanément.

Selon l'invention, le mouvement de translation axiale d'un disque est opposé à celui de l'autre disque, les deux disques se rapprochant l'un de l'autre lors de l'extraction.

D'autres buts, caractéristiques et avantages de la présente invention ressortiront plus clairement de la description qui suit de deux exemples de réalisation donnés à titre illustratif, en référence aux dessins annexés sur lesquels:

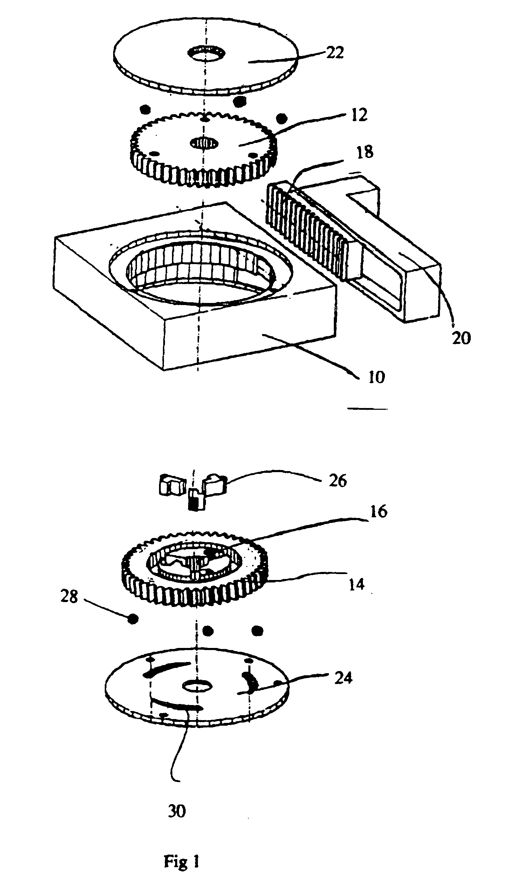

- La Figure 1 est une vue éclatée et en perspective d'un premier mode de réalisation des modules d'extraction du dispositif selon l'invention ; et

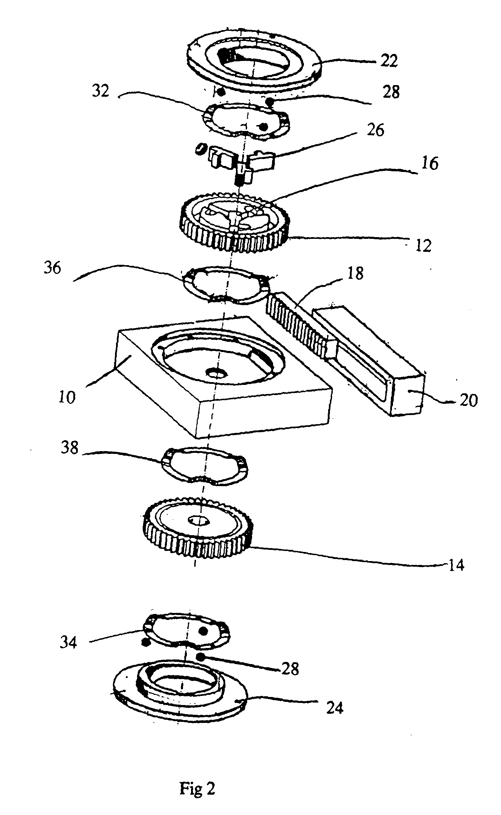

- La Figure 2 est une vue éclatée et en perspective d'un deuxième mode de réalisation des modules d'extraction du dispositif selon l'invention.

En référence maintenant aux Figures, on n'a représenté que les modules d'extraction du dispositif selon l'invention. En effet, on pense que l'Homme du métier connait parfaitement bien les dispositifs pour l'entretien d'automates programmables qui comportent au moins une pince formée d'une paire de bras présentant chacun une extrémité formant porte-électrode au bout de laquelle est emboitée une électrode, et qu'il est, de ce fait, inutile de re-décrire en détail un tel dispositif.

A noter cependant que les modules qui vont être décrits sont utilisables aussi bien dans les systèmes où c'est la pince qui est programmée pour venir vers le dispositif, que dans les systèmes où c'est le dispositif qui va à la pince. En effet, l'invention permet de réduire de façon drastique le poids des modules d'extraction et, de ce fait, ceux-ci peuvent être rendus mobiles très aisément.

Comme l'homme du métier le sait parfaitement, le porte-électrode est généralement constitué par un tube allonge dont l'extrémité affecte une forme complémentaire à celle d'un évidement pratiqué dans l'électrode, de telle manière que l'électrode affecte la forme d'un téton emboité à force sur le tube allonge.

Lorsque l'électrode est usagée, il est donc nécessaire de la changer. Pour ce faire, la première opération consiste à l'ôter du porte-électrode, c'est à dire du tube allonge.

Le dispositif selon l'invention permet donc d'effectuer cette opération sur les deux électrodes simultanément. En effet, les deux modules d'extraction sont coaxiaux et superposés. Ainsi, la pince n'a qu'un mouvement limité à effectuer, consistant à venir mettre les électrodes dans les deux modules d'extraction en regard l'un de l'autre.

Les deux modules d'extraction sont essentiellement constitués par un bâti fixe 10 assurant le guidage de deux disques 12, 14 coaxiaux comprenant chacun une mâchoire centrale 16 de préhension d'une électrode. Cette mâchoire comprend, dans les exemples représentés, trois dents mobiles radialement 26. Les disques 12, 14 sont des pignons entrainés en rotation par un peigne 18 mu en translation dans un bâti annexe 20, par exemple par un moyen de vérin pneumatique ou hydraulique.

Le bâti fixe 10 est fermé de part et d'autre par un couvercle 22, 24 pourvu chacun d'un orifice central dans lequel va être introduite l'électrode à extraire.

Dans le mode de réalisation représenté sur la fg 1, le bâti fixe 10 inclut la came qui va actionner les mâchoires centrales 16 de chaque disque. Dans le mode de réalisation de la fg 2, c'est au contraire le couvercle 22, 24 qui inclut cette came. La position de cette came est donc totalement indifférente.

Dès lors qu'au moins une des électrodes en forme de têton est introduite dans la mâchoire correspondante, le moyen de vérin (non représenté) est actionné pour mouvoir le peigne 18 et, donc, pour imprimer un mouvement de rotation aux deux disques 12, 14. La came précitée assure le serrage des mâchoires 16, et l'électrode à extraire est ainsi fermement aggripée. En poursuivant le mouvement de rotation des disques, il se produit un décollage par rotation de l'électrode par rapport au porte-électrode qui reste immobilisé en rotation et en translation.

Après décollage, il faut imprimer un mouvement de translation axiale aux disques pour assurer l'enlèvement des électrodes. Les disques doivent alors se rapprocher l'un de l'autre pour cette opération.

Dans le mode de réalisation représenté sur la fg 1, le mouvement de translation axiale est assuré par une pluralité de billes 28 disposées entre le disque et chacun des couvercles 22, 24. Une pluralité correspondante de chemins de roulement en relief 30 est pratiquée dans les couvercles 22, 24, de telle manière que les billes déplacent les disques 12, 14 l'un vers l'autre, arrachant ainsi chacune des électrodes de son porte-électrode.

Par un mouvement inverse du peigne 18, les mâchoires sont relachées, et les électrodes tombent par simple gravité dans un réceptacle approprié disposé au-dessous des deux modules d'extractions superposés.

Un moyen de ressort (non représenté) est prévu pour rappeler les deux disques dans leurs positions axiales initiales respectives.

Dans le mode de réalisation représenté sur la fg 2, les billes 28 sont immobiles. Un ressort à lame circulaire 32, 34 est solidaire du disque associé 12, 14. Ce ressort affecte une forme telle que les billes impriment une force verticale à l'ensemble. Ce mode de réalisation est préféré puisqu'il limite le frottement entre les électrodes et les tubes allonge, et que ces derniers subissent ainsi une moindre usure à chaque changement d'électrode.

Un ressort analogue 36, 38 constitue un moyen élastique de rappel des disques vers leurs positions respectives de repos après extraction des électrodes.

Bien que l'on ait représenté et décrit ce que l'on considère actuellement être les modes de réalisation préférés de la présente invention, il est évident que l'Homme de l'Art pourra y apporter différents changements et modifications sans sortir du cadre de la présente invention tel que défini par les revendications jointes.

## Revendications

1. Dispositif d'extraction de la paire d'électrodes de robots de soudage par points, les deux électrodes formant pince de soudage et étant montées en vis-à-vis sur deux portes électrode selon un axe de soudure, les portes électrode étant immobilisés en rotation, ledit dispositif comportant un premier module d'extraction d'une électrode et un second module d'extraction de l'autre électrode, lesdits modules étant constitués chacun d'un disque (12, 14) comprenant une mâchoire centrale de préhension d'une électrode, **caractérisé en ce que** les premier et second modules sont superposés et disposés coaxialement dans un bâti (10), lesdites mâchoires de chacun des disques (12, 14) étant actionnées par une came unique, lesdits disques étant actionnés d'une part en rotation pour entraîner lesdites électrodes en rotation en prise dans lesdites mâchoires afin de les décoller de leur porte électrode et pour actionner d'autre part lesdites électrodes en translation axiale afin de séparer les électrodes des portes électrode, chaque disque (12, 14) étant actionné en rotation et en translation simultanément pour se rapprocher l'un de l'autre.

2. Dispositif d'extraction selon la revendication 1, **caractérisé en ce que** le bâti (10) est fermé par des couvercles (22, 24).

3. Dispositif d'extraction de la paire d'électrodes de robots de soudage par points, les deux électrodes formant pince de soudage et étant montées en vis-à-vis sur deux portes électrode selon un axe de soudure, les portes électrode étant immobilisés en rotation, ledit dispositif comportant un premier module d'extraction d'une électrode et un second module d'extraction de l'autre électrode, lesdits modules étant constitués chacun d'un disque (12, 14) comprenant une mâchoire centrale de préhension d'une électrode, **caractérisé en ce que** les premier et second modules sont superposés et disposés coaxialement dans un bâti (10) fermé de part et d'autre par un couvercle (22, 24), lesdites mâchoires de chacun des disques (12, 14) étant actionnées par une came solidaire de chaque couvercle, lesdits disques étant actionnés d'une part en rotation pour entraîner lesdites électrodes en rotation en prise dans lesdites mâchoires afin de les décoller de leur porte électrode et pour actionner d'autre part lesdites électrodes en translation axiale afin de séparer les électrodes des portes électrode, chaque disque (12, 14) étant actionné en rotation et en translation simultanément pour se rapprocher l'un de l'autre.

4. Dispositif d'extraction selon la revendication 2 ou 3, **caractérisé en ce que** les deux disques (12, 14) sont constitués par des pignons.

5. Dispositif d'extraction selon l'une des revendications précédentes, **caractérisé en ce que** les deux modules d'extraction sont entraînés par un moyen d'entraînement (16, 20) commun se présentant sous la forme d'un peigne (18) actionné en translation selon un mouvement de va-et-vient par un vérin relié à un bâti annexe (20), le peigne agissant sur les pignons.

6. Dispositif d'extraction selon la revendication 5, **caractérisé en ce que** le mouvement de va-et-vient du peigne (18) est transmis aux deux mâchoires (16) par l'action de la came unique ou chaque came des couvercles.

7. Dispositif d'extraction selon la revendication 2, **caractérisé en ce qu'**il comprend un ensemble de billes (28) mobiles disposées entre chaque disque (12, 14) et chaque couvercle (22, 24) dans un chemin de roulement (30) en relief pratiqué dans les couvercles de façon que les disques soient déplacés l'un vers l'autre pour extraire les électrodes suivant un mouvement de translation axiale.

8. Dispositif d'extraction selon la revendication 3, **caractérisé en ce qu'**il comprend un ensemble de billes fixes (28) disposées entre chaque disque (12, 14) et chaque couvercle (22, 24) et **en ce qu'**il comprend un ressort (32, 34) à lame circulaire solidaire de chaque disque (12, 14), les billes agissant sur le ressort (32, 34) pour extraire les électrodes suivant un mouvement de translation axiale.

9. Dispositif d'extraction selon l'une quelconque des revendications précédentes, **caractérisé en ce qu'**il comprend un moyen élastique (36, 38) de rappel des disques (12, 14) vers leur position de repos.

## Claims

1. Extraction device to remove a pair of caps from a spot welding robot, both caps creating a welding gun and being mounted face to face at the welding end of two cap holders according to a welding axis, the cap holders being stopped in rotation, wherein the said device comprises a first extraction module for one cap and a second extraction module for the other cap, the said modules being made each of one disc (12,14) comprising one central gripping jaw to catch one cap, the specificity of which resides in the fact that the first and the second modules are parallel, symmetrical and located in a coaxial position in one body (10), the said jaws of each disc (12,14) being moved by a single cam, the said disc being moved first in rotation to rotate the caps gripped into the jaws to unstuck the caps from the cap holders and to move the said caps according to an axial movement to separate the caps from the cap holders, each disc (12,14) being moved simultaneously in rotation and in translation, to come closer in staying parallel.

2. Extraction device according to claim 1, the specificity of which is that the body (10) is closed by covers (22,24)

3. Extraction device of the pair of caps of the spot welding robot, wherein both caps creates a welding gun and are mounted face to face at the end of two cap holders according to a welding axis, the cap holders being stopped in rotation and the said device comprises a first extraction module for one cap, and a second extraction module for another cap, the said modules being made each of one disc(12,14) comprising a central gripping jaw to catch one cap, the specificity of which is that the first and second modules are parallel , symmetrical and located in an axial position in one body closed at each end by a cover (22,24) the said jaws of each disc (12,14) being moved by one cam interacting with each cover, the said disc being moved on one hand in rotation to move in rotation the said caps gripped in the said jaws to unstuck them from their cap holders and on the other hand to move the said caps in an axial translation movement in order to separate the caps from the cap holders, each disc (12,14) being moved simultaneously in rotation and translation to come closer in staying parallel.

4. Extraction device according to claims 2 and 3 the specificity of which is that both discs (12,14) are made of two tooth wheels.

5. Extraction device according to any of the previous claims, the specificity of which resides in the fact that both extraction modules are moved by a common moving system (18,20) made of a comb (18) moved in translation according to one to-and-fro motion by a cylinder fixed on a second body (20), the comb acting on the tooth wheels.

6. Extraction device according to claim 5, the specificity of which resides in the fact that the to-and-fro motion of the comb (18) is passed on the two jaws (16) either by the action of the single cam or by the action of each cam of the covers

7. Extraction device according to any of the preceding claim from 2 to 6, the specificity of which resides in the fact that it comprises a set of balls (28) located between each disc (12,14) and each cover moving in a relief ball track (30) machined in the cover, so that the discs are coming closer to extract the caps according to an axial translation movement.

8. Extraction device according to any of the preceding claims 2 to 6, the specificity of which resides in the fact that it comprises a set of fixed balls (28) located between each disc (12,14) and each cover (22,24) and comprising one circular flat spring (32,34) linked to each disc (12,14) the balls acting on the spring (32,34) to extract the caps according to one axial translation movement

9. Extraction device according to any of the preceding claims the specificity of which resides in the that it comprises one flexible mean (36,38) to reposition the discs (12,14) at their stand still position.

## Patentansprüche

1. Extraktionsvorrichtung um ein Paar Kappen eines Schweißrobots heraus zu ziehen, worin die beide Kappen bilden eine Punktschweißzange und sind einander gegenüber in der Lötachse auf zwei Kappenhaltern montiert, die in der Rotation starr sind, und worin die so bezeichnete Vorrichtung einen ersten Extraktion-Modul für eine Kappe und einen zweiten für die andere enthält und die beide Module jeweils aus einer Scheibe (12, 14) und einem zentralen Greifer zum Ergreifen einer Kappe bestehen, die **dadurch gekennzeichnet, dass** der 1. und der 2. Modul parallel sind und einander in einem Gehäuse koaxial angeordnet.(10) sind die Greifer jeder Scheibe (12,14) werden durch einen einzigen Nocken aktiviert, die Scheiben werden einerseits in Rotation versetzt um die erwähnten Kappen in Drehung zu versetzen, um die Greifer sie von ihrer Kappenhalter lösen zu können, und um andererseits die Kappen in Axialbewegung zu bringen um sie von ihrer Halter zu lösen, und dass jede Scheibe (12,14) gleichzeitig in Rotation und in Translation versetzt (Abdrehrichtung) wird um sich einander parallel anzunähern.

2. Extraktionsvorrichtung gemäss der Anspruch 1, **dadurch gekennzeichnet dass** das Gehäuse (10) mit Deckeln verschlossen (22, 24) ist.

3. Extraktionsvorrichtung der beiden Kappen eines Schweißrobots, beide Kappen bilden eine Punktschweißzange und die einander gegenüber auf 2 Kappenhaltern montiert in der Lötachse sind um die Kappenhalter bei Drehung starr bleiben, worin das Gerät einen ersten Extraktions-Modul für die eine und einen zweiten für die andere Kappe enthält, worin beide Module jeweils aus einer Scheibe (12,14) und einem zentralen Kappengreifer bestehen, **dadurch gekennzeichnet, daß** der 1. u. der 2. Modul übereinander koaxial angeordnet sind in einem beidseitig durch Deckel verschlossenen Gehäuse(22,24), dass die Greifer beider Scheiben (12,14) je durch einen mit dem Deckel verbundenen Nocken aktiviert werden, dass beide Scheiben einerseits in Rotation versetzt verden um die erwähnten Kappen in Drehung zu versetzen, so dass die Greifer sie von ihrer Kappenhalter lösen können, und um andererseits die Kappen in Axialbewegung zu bringen um sie von ihrer Halter zu lösen, dass jede Scheibe (12,14) gleichzeitig in Rotation und in Translation versetzt (Abdrehrichtung) wird um sich einander parallel anzunähern.

4. Extraktionsvorrichtung nach Ansprüche 2 u. 3, wobei die beiden Scheiben aus Zahnräder bestehen.

5. Extraktionsvorrichtung gem. einer der vorherigen Ansprüche, wobei die beiden Extraktionsmodule durch ein gemeinsames (18,20) kammförmiges (18) System bewegt werden, in Translation in einer Hin-und-Her-Bewegung durch einen Zylinder aus einem Nachbargehäuse (20), aktiviert werden wobei der Kamm auf Zahnrad wirkt.

6. Extraktionsvorrichtung nach Ansprüche 5, wobei die Hin-und-Her-Bewegung der Kammschiene (18) den beiden Greifern (16) durch den Einzel-Nocken oder die beide Nocken der Deckel übertragen wird.

7. Extraktionsvorrichtung nach einer der Ansprüche 2bis - 6 worin sie mit mobilen Kugellagern (28) zwischen beiden Scheiben (12,14) und beiden Deckeln (22, 24) in einer erhabenen Rollschiene (30) auf den Deckeln, ausgerustet wird so dass die Scheiben verschoben werden und sich nähern, um die Kappen in einer Translationsbewegung herauszuziehen.

8. Extraktionsvorrichtung nach einer der Ansprüche 2bis - 6, **dadurch gekennzeichnet dass** einen fixen Kugellagern (28) zwischen jeder Scheibe(12,14) und jedem Deckel (22,24) und durch eine kreisförmige Blattfeder (32,34) mit rundem Blatt für jede Scheibe (12,14), eingelegt ist wobei die Kugellager auf die kreisförmigen Blattfeder zwecks Kappen-Abzug in Abdrehrichtung (einer axialen und translationalen Bewegung) wirken.

9. Extraktionsvorrichtung nach einer die vorherigen Ansprüche **dadurch gekennzeichnet ist dass** eine elastisches Mittel (36,38) zur Rückstellung der Scheiben in Ausgangsposition eingelegt ist.
